# EUROPEAN PATENT APPLICATION

(11) **EP 1 914 716 A2**
(43) Date of publication of application: **23.04.2008**
(21) Application number: 08001864.1
(22) Date of filing: 07.02.2003
(51) Int. Cl.: G10H 1/40, G10H 1/00, A63F 13/12

(54) **Control of multi-user environments**

(62) Divisional of application: 03815716.0
(71) Applicant: Nokia Corporation, 02150 Espoo (FI)
(72) Inventor: Holm, Jukka, 33230 Tampere (FI); Laine, Pauli, 02160 Espoo (FI)
(74) Representative: Swindell & Pearson

(57) **Abstract**

A system for the interactive production of music, comprising: a first device including a first user input for controlling musical synchronisation information; and a second device including: input means operable to receive the musical synchronisation information; a second user input for controlling the content of first musical control data; and a synthesiser for producing music in dependence upon the first musical control data and the musical synchronisation information.

## Description

### TECHNICAL FIELD AND BACKGROUND OF THE INVENTION

Embodiments of the invention relate to a multi-user environment in which the action of a participant or participants can be dynamically controlled by the users.

An example of such an environment is a gaming environment in which each user controls a participating character in the game and the participant characters compete against each other. The users may interact via personal computers connected to the internet or face-to-face using hand-portable devices.

### BRIEF SUMMARY OF THE INVENTION

According to one aspect of the present invention there is provided a multi-user system, for interactively controlling the action of at least a first participant in an environment, comprising: a first device operable by a first user to dynamically control the action of the first participant in the environment; and a second device simultaneously operable by a second user to dynamically vary the environment.

According to another aspect of the present invention there is provided a method for multi-user interactive control of at least a first participant in an environment, comprising the steps: a first user dynamically controls the action of the first participant in the environment; and simultaneously, a second user dynamically varies the environment.

According to a further aspect of the present invention there is provided a hand-portable device, for joining a multi-user system in which the action of at least a first participant in an environment is interactively controlled by another device, comprising: a user input interface; an input and an output for joining to the system; and means, responsive to the user input interface, for dynamically varying the environment.

The environment may be defined by the conditions that limit the action of the first participant. A first device would be operable by a first user to dynamically control the action of the first participant but only to the extent that a first set of limiting conditions allows. A second device would be simultaneously operable by a second user to dynamically vary the first set of limiting conditions.

According to a further aspect of the present invention there is provided a system for the interactive production of music, comprising: a first hand-portable device including a first user input for controlling musical synchronisation information; and a second hand-portable electronic device including: input means operable to receive the musical synchronisation information; a second user input for controlling the content of first musical control data; and a synthesiser for producing music in dependence upon the first musical control data and the musical synchronisation information.

According to a still further aspect of the present invention there is provided a method of interactively producing music, comprising the steps of: varying musical synchronisation information in response to input, at a first hand portable device, from a first user; receiving musical synchronisation information at a second hand portable device; producing first musical control data in response to input, at the second hand portable device, from a second user; and producing music at the second device in dependence upon the first musical control data and the musical synchronisation information.

### BRIEF DESCRIPTION OF THE DRAWINGS

For a better understanding of the present invention reference will now be made by way of example only to the accompanying drawings in which:
Fig. 1 illustrates networked hand-portable electronic devices; and
Fig. 2 schematically illustrates a hand-portable electronic device.

### DETAILED DESCRIPTION OF EMBODIMENTS OF THE INVENTION

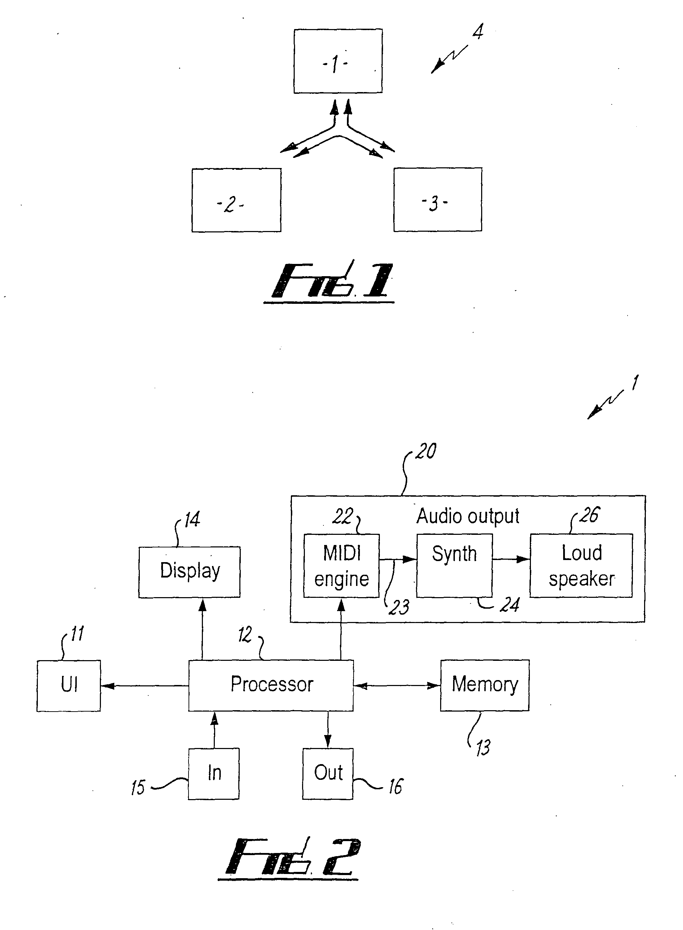

Fig. 1 illustrates a network 4 comprising first 1, second 2 and third 3 hand-portable electronic devices. The network may be a local network so that the users of the devices are 'face-to-face' or, alternatively, the users may be remote from each other. The network 4 may be formed by any suitable mechanism including directly or indirectly by wireless or physical connection of two or more devices. One connection mechanism uses Low Power Radio Frequency transceivers (e.g. Bluetooth) that allow unrestricted movement of the hand-portable devices. The network 4 enables the devices to co-operate and perform as an ensemble.

Fig 2 schematically illustrates a hand-portable electronic device 1 for synthesising music. It has a user input interface (Ul) 11, a processor 12, a memory 13, a display 14, an input 15 for receiving data, an output 16 for transmitting data and an audio output section 20.

The user input interface 11 is connected to the processor 12 and allows a user of the device 1 to control the operation of the device via the processor 12. The processor 12 is connected to the input 15 and the output 16. It is operable to receive and process data received via the input 15 and to provide data to the output 16 for transmission. The processor 12 is connected to the memory 13 and is operable to read from and write to the memory 13. The processor 12 is also operable to control the display 14. In other embodiments, the display and user input interface may be combined. The input 15 and output 16 may be a radio frequency receiver and transmitter respectively, alternatively they may be part of a single physical interface (e.g. USB port).
They allow the device 1 to network with other devices.

The audio output section may be similar to a sound card of a personal computer. It comprises a MIDI engine 22, which is connected to a MIDI synthesizer 24, which is in turn connected to a loudspeaker 26 (or other audio output such as a jack or Bluetooth transceiver for a headset). The MIDI engine 22 provides musical control data 23 as a MIDI data stream in real time (as it is played) to the MIDI synthesizer 24. The musical control data 23 may include content from a MIDI file transferred to the MIDI engine 22 by the processor 12, it may also include additional or replacement messages introduced by the MIDI engine 22 under the control of the processor 12.

The MIDI synthesizer 24 receives the MIDI messages one at a time and responds to these messages by playing sounds via the loudspeaker 26. The MIDI messages are received and processed by the MIDI synthesizer in real time.

As illustrated in Fig. 1, the hand-portable electronic device 1 may form an ad-hoc network 4 with one or more other hand-portable devices 2, 3. The network is preferably, but not necessarily, a local network so that the users of the devices are 'face-to-face'.

The network 4 enables the devices to co-operate and perform as an ensemble. When the devices perform as an ensemble the musical output of the ensemble is the combination of the musical output of each device. This musical output can be interactively varied by the users of the devices. This allows interactive improvised composition of music by multiple users who are preferably face-to-face.

Each user may have exclusive responsibility for one or more aspects of the musical output i.e. they and they alone can control that aspect of the musical output.

As an example, a pre-determined musical track can be varied in real time by adding effects (echo, reverberation etc), changing the musical arrangement, removing instrumentation such as the drum beat, or removing melodies, bass line etc. The predetermined musical track can be provided as a MIDI file to the MIDI engine 22 by the processor 12. A user creates the effects by controlling the MIDI engine, via the UI 11 and processor 12, to add to, remove or adapt the MIDI file messages input to the synthesiser 24.

As another example, separate pre-determined musical tracks may be mixed together interactively. Each predetermined musical track can be provided as a MIDI file to the MIDI engine 22 by the processor 12. A user controls the MIDI engine 22, via the Ul 11 and processor 12, to add to, remove or adapt the MIDI file messages input to the synthesiser 24.

As another example, some or all of the users may each be responsible for the performance of an instrument in the ensemble. A user then controls their device to vary the synthetic voice of that instrument in the ensemble i.e. they play the instrument. The user of the device can perform melodies, rhythms, loops etc in real-time using the device's Ul 11, which may be a keypad or some other sensor or controller such as an integrated accelerometer that responds to moving the device. The musical output of the ensemble is the combination of the instrument voices controlled by the users. The ensemble may additionally produce a pre-determined backing track or tracks of music. The output of the musical ensemble is then the combination of the backing track(s) and the instruments controlled by the users.

The devices 1, 2, 3 of the network may be mobile telephones. Each mobile telephone has an accelerometer that detects when the phone is shaken. The networked mobile telephones form an impromptu samba band. A samba track is performed on one or each of the phones as background music. The background music can be produced by transferring a stored MIDI file to the MIDI engine 22, by the processor 12. Each phone produces percussion sounds when it is shaken. The output of the accelerometer is converted into MIDI messages. These additional MIDI messages are added by the MIDI engine 22 to the input of the synthesiser 24 which controls the loudspeaker 22 to produce the additional percussion in time with the shaking of the phone. The percussion sounds controlled by the shaking of a particular phone may be produced by that phone only, or they may be produced on all the phones simultaneously. In the latter case, the additional MIDI messages are transferred via the network 4 to the other phones.

The interactive musical control is achieved using multiple musical applications.

One type of musical application allows one or more musical effects to be created and changed in real-time e.g. echo, reverberation etc. Another type of musical application, an instrument application, provides the voice of a particular instrument.

A musical application can be used in an Independent 'Freestyle' mode, in a Slave 'Assisted' mode or in a Master mode. A session is an ensemble of musical applications. In any session there will only be one Master musical application. The session will involve a plurality of networked devices.

In the Independent mode a musical application is controlled as a traditional instrument - the output depends solely on the talent of the user with the available user input interface (e.g. a mobile phone keyboard).

In the Master mode, the musical application is responsible for the synchronisation of the ensemble of Slave musical applications. The Master musical application provides musical synchronisation information to each Slave musical application, whether it is in the same device or in another device.

The musical synchronisation information may define the tempo. When a tempo is defined, the Slave musical applications vary their timing to match the Master musical application continuously during the session. This may be achieved in the Slave by varying the output of the MIDI engine 22 using the processor 12. The time at which a note is turned on or off is easily varied. Thus the music output at a Slave is dependent upon the musical synchronisation information received from the Master. A suitable Master musical application would be a drum beat application.

The musical synchronisation information may also define important musical features or changes to these features that are shared by musical applications or devices.

The musical synchronisation information may include: the harmony (chord sequence); the identities of the musical applications being used in the ensemble; the identities of the background track(s) being used in the ensemble (if any); the relative volumes of the instrument applications; the musical key; the time signature and the energy of an instrument voice or the music as a whole; or the modes of the participant musical applications i.e. whether a musical application is operating in the Slave mode or an Independent mode.

If a background track is used, it may be played as a MIDI file through the Master musical application. The users of the devices would therefore follow a predetermined lead.

In the Slave mode, a musical application is synchronised to the Master musical application and the ensemble of Slave musical applications, in the same or separate devices, function as a single system. The Slave is able to synchronise with the Master musical application using the musical synchronisation information transferred from the Master musical application to the Slave musical application, via the network (if necessary).

The Slave musical application may operate in an assisted playing mode. In the assisted playing mode the output of the musical application is not an exact reproduction of the music created by the user. The musical output is automatically corrected/ enhanced to ensure that the music produced adheres to certain principals. This is particularly useful for devices with input devices optimised for other purposes e.g. PDA, mobile phone keypads. Consequently, no musical knowledge or training is required to perform music using the system and the users are given the illusion of playing better than they actually do. The amount of assistance provided can be varied and may be chosen by the user to suit their ability.

For example, the user's timing may be automatically corrected to keep tempo.
Automatic correction of the timing to keep tempo may be achieved by quantising the tempo, into possible beat positions. When the user, for example, makes an input to a drum beat application that does not have exactly the correct timing, the timing is adjusted to the nearest possible beat position. The correction of timing may be achieved by using the MIDI engine to vary the MIDI messages before they are provided to the synthesiser. As another example, correct chords are generated, corrected or completed to keep harmony.

It is preferable for each device to have a copy of each musical application used in the ensemble, so that any device can synthesise sounds created using musical applications in other devices.

A further application can be used to control the musical synchronisation information. The modifier application does not itself produce any music but is used to control the music made by others.

In one embodiment, the modifier application is the Master musical application of the ensemble. The user can use the modifier application to control and vary the musical synchronisation information sent to the Slave musical applications.

In another embodiment, the modifier application remotely controls the Master musical application to control and vary the synchronisation information sent by the Master musical application to the Slave musical applications. The modifier application is in a different device to the Master musical application and the control signals for controlling the Master musical application are sent by the modifier application across the network 4.

Thus, a user can participate in the musical ensemble without playing any musical instrument, but by controlling the tempo, structure or harmony the others are using.

The synchronisation information is sent globally to the Slave musical applications in any one of four different ways:

The synchronisation information includes tempo synchronisation that ensures the applications play at the same time. One application has to act as Master Application, based on which the Slave Applications automatically and continuously match their timing. The synchronisation information also includes structural synchronisation information that synchronises the applications harmony-wise and in other ways.

The structural synchronisation information can be sent using any one of:
1) as Standard MIDI File (SMF) meta-event data
2) MIDI System Exclusive Real Time messages
3) MIDI General Purpose Controllers
4) MIDI Non-Registered Parameter Number

Options 3) or 4) are preferred.

The musical synchronisation information may be selected by the user of the modifier application from a number of options for selection. The options given for selection may be automatically limited so that the music produced is within acceptable boundaries of taste.

The modifier application may be used to vary the amount of automated assistance a user receives for their instrument playing.

Consequently, there is provided a multi-user musical system 4, for interactively controlling the action (e.g. musical output) of at least a first participant instrument in a musical environment. The system comprises a first device 1 operable by a first user to dynamically control the action (e.g. musical output) of the first participant instrument in the environment and a second device 2 simultaneously operable by a second user to dynamically vary the musical environment. The first device 1 houses a Slave musical application and the second device 2 houses a Modifier application. The second device 2 is not operable to control the action of a participant. The musical system 4 may further comprise a third device 3 simultaneously operable by a third user to dynamically control the action (e.g. musical output) of a second participant instrument in the musical environment.

The hand portable device illustrated in Figs. 1 and 2 may alternatively or additionally be used to play a game. The hand-portable electronic device 1 may form an ad-hoc network 4 with one or more other hand-portable devices 2, 3. The network is preferably, but not necessarily, a local network so that the users of the devices are 'face-to-face'.

The network 4 enables the devices to co-operate and play a game together. In this scenario, Fig. 1 illustrates a multi-user gaming system 4, for interactively controlling the action of at least a first participant in a gaming environment. The system comprises a first device 1 operable by a first user to dynamically control the action of the first participant in the gaming environment and a second device 2 simultaneously operable by a second user to dynamically vary the gaming environment. This second device is not operable to control the action of a participant.

As an example only, the game may be Nokia Snake (Trademark) II in which the movement of a snake is directed by the first user so that the snake moves around a maze while eating food. The second user may, for example, control the layout of the maze or the speed of movement of the snake.

The system may further comprise a third device simultaneously operable by a third user to dynamically control the action of a second participant in the gaming environment. The game-play will be displayed on the displays of the first, second and third devices.

Thus the first user may participate in a game by himself or participate in a game along with the third user, while the second user modifies the gaming environment. The second user does not participate in the game as such but is still involved.

The gaming environment includes the virtual surroundings in which the first participant is movable by the actions of the first user and the second participant is movable by the third user. It may for example include: the layout of a level in a game and/or the simulated weather in a game and/or the difficulty level of the game and/or the tempo of the game and/or the characteristics of the participants. The gaming environment may also include transitory events initiated by the second user. For example, the second user may create an obstacle in a race track which the other players have to drive around or place bonus food worth extra points in the maze of Nokia Snake II which the participants have to try and eat first.

Although embodiments of the present invention have been described in the preceding paragraphs with reference to various examples, it should be appreciated that modifications to the examples given can be made without departing from the scope of the invention as claimed.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

A multi-user system, for interactively controlling the action of at least a first participant in an environment, comprising: a first device operable by a first user to dynamically control the action of the first participant in the environment; and a second device simultaneously operable by a second user to dynamically vary the environment.

A multi-user system further comprising a third device simultaneously operable by a third user to dynamically control the action of a second participant in the environment.

A multi-user system wherein the second device is not operable to simultaneously control the action of a participant and dynamically vary the environment.

A multi-user system wherein the first device comprises a first display and the second device comprises a second display, wherein the first and second displays are operable to display the actions of the first participant in the environment.

A multi-user system wherein the environment includes the virtual surroundings in which the first participant is movable by the actions of the first user.

A multi-user system wherein the environment is a gaming environment including any one or more of: the layout of a level in a game, the simulated weather in a game, the difficulty level, the tempo and the characteristics of the participants.

A multi-user system wherein the first participant is a participant instrument and the first device is operable to dynamically control the music produced by the participant instrument.

A multi-user system wherein the action of the first participant is playing a note, notes or chords.

A multi-user system wherein the environment includes shared musical features.

A multi-user system wherein the environment includes tempo.

A multi-user system wherein the environment includes harmony.

A multi-user system wherein the environment includes any one or more of: the identities of the participant instruments; the identities of background track(s) (if any); the relative volumes of the participant instruments; the musical key; and the time signature.

A multi-user system wherein a participant instrument can have a Slave mode of operation or an Independent mode of operation and the environment includes the mode of operation of a participant instrument.

A multi-user system wherein the environment includes the extent to which the action of a participant instrument is automatically enhanced.

A multi-user system wherein the first device comprises a first audio output and the second device comprises a second audio output, wherein the first and second audio outputs are operable to perform the actions of the first participant in the environment.

A multi-user system wherein the first and second devices form an ad-hoc low power wireless network.

A method for multi-user interactive control of at least a first participant in an environment, comprising the steps: a first user dynamically controls the action of the first participant in the environment; and simultaneously, a second user dynamically varies the environment.

A device, for joining a multi-user system in which the action of at least a first participant in an environment is interactively controlled by another device, comprising: a user input interface; an input and an output for joining to the system; means, responsive to the user input interface, for dynamically varying the environment.

## Claims

1. A system for the interactive production of music, comprising:
a first device including a first user input for controlling musical synchronisation information; and
a second device including:
input means operable to receive the musical synchronisation information;
a second user input for controlling the content of first musical control data; and
a synthesiser for producing music in dependence upon the first musical control data and the musical synchronisation information.

2. A system as claimed in claim 1, wherein the first device produces music and controls the musical synchronisation information simultaneously.

3. A system as claimed in claim 1, wherein the first device either produces music or controls the musical synchronisation information, but does not do both simultaneously.

4. A system as claimed in any preceding claim, wherein the second device additionally includes output means operable to transfer the first musical control data to the first device; and the first device additionally includes input means operable to receive the first musical control data and a synthesiser for producing music in dependence upon the first musical control data and musical synchronisation information.

5. A system as claimed in any preceding claim, wherein the first device has output means for sending musical synchronisation information to the second device.

6. A system as claimed in any preceding claim wherein the first device has input means for receiving the musical synchronisation information.

7. A system as claimed in any preceding claim, wherein the the input means of the second device is arranged to receive second musical control data from another device and the synthesiser of the second device is arranged to produce music in dependence upon the first musical control data, the second musical control data and the musical synchronisation information.

8. A method of interactively producing music, comprising the steps of:
varying musical synchronisation information in response to input, at a first device, from a first user;
receiving musical synchronisation information at a second device;
producing first musical control data in response to input, at the second device, from a second user; and
producing music at the second device in dependence upon the first musical control data and the musical synchronisation information.

9. A method as claimed in claim 8 further comprising the step of:
producing music at the first device in dependence upon the first musical control data and the musical synchronisation information.
